# EUROPEAN PATENT APPLICATION

(11) **EP 4 787 289 A1**
(43) Date of publication of application: **05.08.2026**
(21) Application number: 26155327.5
(22) Date of filing: 30.01.2026
(51) Int. Cl.: G06T 3/4046, G06T 3/4053

(54) **IMAGE PROCESSING METHOD, IMAGE PROCESSING APPARATUS, AND STORAGE MEDIUM**

(30) Priority: 04.02.2025 JP 2025016496
(71) Applicant: Canon Kabushiki Kaisha, Tokyo, 146-8501 (JP)
(72) Inventor: IDA, Yoshiaki, Tokyo (JP); KUSUMI, Yuichi, Tokyo (JP); ONO, Yukino, Tokyo (JP)
(74) Representative: WESER & Kollegen Patentanwälte PartmbB

(57) **Abstract**

An image processing method includes acquiring a plurality of second images (21 to 24) by dividing a first image (10), acquiring a plurality of third images (31 to 34) by increasing a resolution of each of the plurality of second images at a first magnification using a machine learning model, and acquiring a fourth image (40) by combining the plurality of third images with each other. The fourth image corresponds to an image acquired by increasing a resolution of the first image at a target magnification. The image processing method further includes converting a resolution of any one of the first image, at least one of the plurality of second images, at least one of the plurality of third images, or the fourth image, at a second magnification based on the first magnification and the target magnification.

## Description

### BACKGROUND

### Field of the Technology

The present disclosure relates to an image processing method, an image processing apparatus, and a storage medium.

### Description of the Related Art

In order to reduce memory consumption, a method for performing high-resolution processing (i.e., processing of increasing a resolution) using a machine learning model for each of a plurality of sub-images generated by dividing an input image has conventionally been known (see Japanese Patent No. 7184488).

### SUMMARY

The present disclosure in its first aspect provides an image processing method as specified in claims 1 to 18.

The present disclosure in its second aspect provides an image processing apparatus as specified in claim 19.

The present disclosure in its third aspect provides a storage medium as specified in claim 20.

Features of the present disclosure will become apparent from the following description of embodiments with reference to the attached drawings. The following description of embodiments will be described by way of example.

### BRIEF DESCRIPTION OF THE DRAWINGS

Fig. 1 is an explanatory diagram illustrating sampling deviation.
Fig. 2 is a block diagram of an image pickup apparatus according to a first embodiment.
Fig. 3 is a flowchart illustrating high-resolution processing (i.e., processing of increasing a resolution) according to the first embodiment.
Fig. 4 illustrates an example of division processing according to the first embodiment.
Fig. 5 is a flowchart illustrating high-resolution processing (i.e., processing of increasing a resolution) according to a second embodiment.
Fig. 6 illustrates an example of division processing according to the second embodiment.

### DESCRIPTION OF THE EMBODIMENTS

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Referring now to the accompanying drawings, a detailed description will be given of embodiments according to the present disclosure. Corresponding elements in respective figures will be designated by the same reference numerals, and a duplicate description thereof will be omitted.

An image processing unit according to one embodiment performs high-resolution processing, using a machine learning model such as a neural network, on an input image generated by imaging (e.g., shooting) through an optical system. Here, the high-resolution processing (i.e., processing of increasing a resolution) refers to image estimation processing for enlarging an input image so as to output an image having a greater number of pixels.

To train the machine learning model that performs the high-resolution processing, it is sufficient to generate a high-resolution image and a low-resolution image obtained by downscaling the high-resolution image, and to use these images respectively as a ground-truth image and a training image. That is, the machine learning model estimates a high resolution image from the training image, and the machine learning model is optimized such that a difference from the ground-truth image is minimized. At this time, the ground-truth image and the training image may differ in resolution by the desired magnification factor to be trained by the machine learning model, and may differ in noise intensity, development processing, blur included in the image, and other conditions. In this manner, the machine learning model is trained to reduce noise, compression artifacts, and blur in accordance with the high-resolution processing. The training image may also be enlarged in advance to the same resolution as that of the ground-truth image based on known enlargement processing, such as bicubic interpolation. In such a case, the machine learning model is trained to estimate the ground-truth image by sharpening the already-enlarged training image.

In generating the ground-truth and training images, each image may be generated by simulation based on an original image corresponding to an object, assuming the target image quality and input image quality. More specifically, blur corresponding to the optical transfer function of the optical system may be applied, and noise of the image pickup apparatus assumed as an input device, pixel arrangement of the image sensor, and development processing may be reflected. This enables acquisition, through training, of a machine learning model capable of highly accurate estimation.

The high-resolution processing according to this embodiment outputs an image by making an input image into a high resolution image at a variable target magnification. Using high-resolution at a variable target magnification, the user can output an image with an arbitrary number of pixels relative to the input image. On the other hand, an image having a desired resolution can be obtained from an input image of arbitrary resolution. For example, an image arbitrarily trimmed at any magnification can be restored to the same resolution as before trimming. In the case of moving images, the high-resolution processing is performed on a Full HD or 4K input moving image to generate an 8K output moving image. Since the number of pixels on an image sensor differs according to the model of the image pickup apparatus, raw data of a moving image may have a resolution such as 6K or 7K according to the model. From such raw data, a moving image having a desired resolution, such as 8K, can be generated.

In high-resolution processing using machine learning, the enlargement factor is determined during training, and it is difficult to provide variable magnification. Accordingly, this embodiment achieves high-resolution processing that arbitrarily sets a target magnification of an output image for an input image by combining fixed-magnification high-resolution processing using machine learning with resolution-conversion processing at a variable-magnification. As described later, in combining two resolution-conversion processes, an intermediate image is retained to which the first resolution-conversion processing is applied, and a larger amount of memory is used than in the case of executing single high-resolution processing.

The high-resolution processing according to this embodiment includes first conversion processing that performs the high-resolution processing at a fixed magnification based on a machine learning model trained as described above, and second conversion processing that changes the resolution at a variable magnification. The second conversion processing may be any known resolution-conversion processing. Since high-resolution processing using the machine learning model has difficulty in changing the magnification, the second conversion processing may be resolution-conversion processing that does not rely on machine learning, such as bicubic interpolation or bilinear interpolation.

The image processing method according to each embodiment includes acquiring a plurality of input patch images (e.g., second images) by dividing an input image (e.g., a first image). This image processing further includes acquiring a plurality of output patch images (e.g., third images) corresponding to the respective input patch images, at least based on the first conversion processing that increases a resolution of each of the plurality of second images at the first magnification using the machine learning model. This image processing further includes acquiring an output image (e.g., a fourth image) by combining the plurality of output patch images with each other. The fourth image corresponds to an image acquired by increasing a resolution of the first image at a target magnification, and is obtained by performing at least the first conversion processing and the second conversion processing based on the first image. A resolution of any one of the first image, at least one of the plurality of second images, at least one of the plurality of third images, or the fourth image, is converted at a second magnification based on the first magnification and the target magnification. At least one resolution of the plurality of second images or at least one resolution of the plurality of third images may be converted at the second magnification.

The image processing method in each embodiment includes the division processing, combination processing, first conversion processing, and second conversion processing. The first conversion processing based on the machine learning model is applied to the divided patch images, whereby the memory capacity of the graphics processing unit (GPU) can be reduced. Therefore, the processing is executed in the order of division processing, first conversion processing, and combination processing. On the other hand, the timing at which the second conversion processing is performed is optional. The image input to the first conversion processing may be at least one of the input patch images obtained by the division processing, or an image obtained by applying the second conversion processing to an image based on the input image. An image based on these images, for example an image modified by known image processing, may also be used. The image input to the second conversion processing may be at least one of the input image, the input patch images obtained by the division processing, an image obtained by applying the first conversion processing to an image based on the input image, or an image after the combination processing. Likewise, an image based on such images may also be used, for example, these images may be modified by known image processing. Each processing order has both benefits and costs, which affect the image quality of the output image.

First, the case in which the second conversion processing is enlargement processing is considered. In a case where the second conversion processing is executed before the first conversion processing, processing using the machine learning model may be performed on a larger number of pixels. Since processing using the machine learning model generally requires a long processing time and becomes the rate-limiting step of the entire operation, this order may not be used. Therefore, the second conversion processing may be performed after the first conversion processing.

Next, the case in which the second conversion processing is reduction processing is considered. When the second conversion processing is performed before the first conversion processing, processing using the machine learning model is performed for fewer pixels. Therefore, this processing is advantageous in terms of a processing time. On the other hand, since the input image is once down-sampled, aliasing occurs at a Nyquist frequency lower than that of the input image, and image quality deteriorates. When the second conversion processing is performed after the first conversion processing, processing using the machine learning model is performed for a larger number of pixels, but a higher-quality output image is obtained.

Regardless of whether the second conversion processing is enlargement processing or reduction processing, if the second conversion processing precedes the first conversion processing, the variable resolution-conversion processing corresponding to the target magnification is applied to the input image, which changes the image quality. In this case, in the first conversion processing, images of various qualities are input to the machine learning model, and the effects of the high-resolution processing by the first conversion processing deteriorate, and the image quality is degraded. Hence, performing the first conversion processing before the second conversion processing can provide an output image with desirable quality. Since an image having a constant quality based on the characteristics of the image pickup apparatus is input to the machine learning model, the first conversion processing can be executed with high accuracy by training the machine learning model using learning data assuming images captured by the image pickup apparatus.

The second conversion processing may be performed before the combination processing. For example, assume that the magnification of the first conversion processing (first magnification) is 2× and that the magnification of the second conversion processing (second magnification) is 3/4×. If the combination processing is performed before the second conversion processing, an input image of 200 × 200 pixels is enlarged to 400 × 400 pixels by the first conversion processing and the combination processing, and an output image of 300 × 300 pixels is obtained by the second conversion processing. In this case, both the intermediate image of 400 × 400 pixels and the output image of 300 × 300 pixels are stored in the memory. On the other hand, if the second conversion processing is performed before the combination processing, the second conversion processing is executed on each patch, and therefore the full intermediate image of 400 × 400 pixels may not be stored in the memory. Thus, an intermediate image of 200 × 200 pixels and an output image of 300 × 300 pixels may be stored in the memory, and the memory capacity can be reduced for the overall processing.

This is similarly applied when the second conversion processing is enlargement processing. Assume that the magnification of the first conversion processing is 2×, the magnification of the second conversion processing is 5/4×, and the input image has 200 × 200 pixels. If the combination processing is performed before the second conversion processing, both the intermediate image of 400 × 400 pixels and the output image of 500 × 500 pixels may be stored in the memory. On the other hand, if the second conversion processing is performed before the combination processing, an intermediate image of 200 × 200 pixels and an output image of 500 × 500 pixels may be stored in the memory. Particularly, the larger the resolution of the intermediate image is than that of the input or output image, the greater the memory-capacity reduction effect is. Therefore, when the second conversion processing is reduction processing, the memory capacity can be reduced even further.

From the above, when the combination processing is performed before the second conversion processing, the intermediate image is stored after the first conversion processing, and a larger memory capacity is required than that in a case where the output image can be directly obtained from the input image by single high-resolution processing. However, by executing the second conversion processing before the combination processing, the memory capacity required for the overall operation can be made approximately equivalent to that of single high-resolution processing, while a variable target magnification can be achieved.

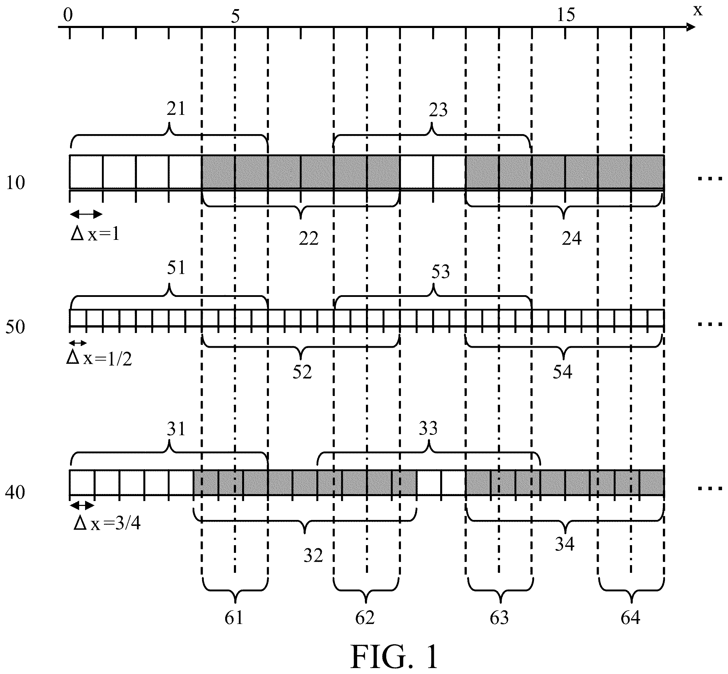

The second magnification, which is variable, may be a non-integer magnification. A problem that arises in this case, sampling deviation, will be discussed using Fig. 1. Fig. 1 is an explanatory diagram illustrating sampling deviation. Here, a case is illustrated in which the high-resolution processing is performed in the order of division processing, first conversion processing, second conversion processing, and combination processing. Only one row of the input image (first image) 10, input patch images (second images) 21 to 24, intermediate patch images 51 to 54, output patch images (third images) 31 to 34, and output image (fourth image) 40 is illustrated.

First, the input image 10 is divided to obtain the input patch images 21 to 24. Each input patch image has a size of 6 × 6 pixels and overlaps each other with a width of 2 pixels. The magnification of the first conversion processing (first magnification) is 2×, and intermediate patch images 51 to 54 are obtained from the corresponding input patch images 21 to 24 based on the first conversion processing. Next, the magnification of the second conversion processing (second magnification) is 2/3×, and output patch images 31 to 34 are obtained from the intermediate patch images 51 to 54 based on the second conversion processing. Here, each output patch image is obtained from at least a partially overlapping region of the intermediate patch images. The acquired range of output patch images 32 and 34 correspond to the gray-shaded portions illustrated in Fig. 1. Then, the combination processing on the output patch images 31 to 34 can provide an output image 40 in which the input image is enlarged by a factor of 4/3. That is, the resolution ratio (target magnification) of the output image relative to the input image is the product of the first and second magnifications, which is 4/3. The sampling intervals Δx of each pixel are determined by the inverse of each magnification, and are 1, 1/2, and 3/4 respectively for the input patch images 21 to 24, the intermediate patch images 51 to 54, and the output patch images 31 to 34.

Next, consideration is given to a region occupied by each patch image with respect to the x-coordinate. Since the first magnification factor is an integer, both the input patch image 21 and the intermediate patch image 51 occupy the region 0 ≤ x ≤ 6, having horizontal pixel numbers of 6 and 12 pixels, respectively. The ratio of horizontal pixel numbers is equal to the first magnification factor. Similarly, the input patch images 22 to 24 and the intermediate patch images 52 to 54 occupy regions having identical x-coordinate ranges. However, because the second magnification factor is non-integer, the regions occupied before and after the second conversion processing do not necessarily coincide in the x-coordinate. For example, while the intermediate patch image 52 occupies 4 ≤ x ≤ 10, the output patch image 32 occupies 15/4 ≤ x ≤ 42/4, having horizontal pixel numbers of 12 and 9 pixels, respectively. Both the intermediate patch image 54 and the output patch image 32 occupy 12 ≤ x ≤ 18, with horizontal pixel numbers of 12 and 8 pixels, respectively. That is, the occupied coordinate ranges may differ before and after the second conversion processing.

Consider now the sampling positions before and after the second conversion processing. The angle of view (e.g., field angle) is defined as a center-of-gravity (e.g., centroid) position of the outermost pixel or a region occupied by the pixels. Generally, in image resolution-conversion processing, the sampling interval is changed based on the conversion magnification while the angle of view is maintained, thereby the sampling positions after conversion are determined. In such a case, the angle of view of the input image to the second conversion processing and the angle of view of the output image from the second conversion processing are uniform across different divided regions. The relative relationship between the sampling positions of the input image to the second conversion processing and the sampling positions of the output image from the second conversion processing is also uniform across the divided regions. However, when the second magnification factor is non-integer, the angle of views before and after the second conversion processing are not constant among the divided regions, and the sampling-position relationship before and after the second conversion processing is also not constant among the divided regions. Thus, in this embodiment, a shift in the relative sampling-position relationship before and after the second conversion processing among a plurality of divided regions (e.g., second images) will be referred to as sampling deviation. When sampling deviation occurs, the angle of view before and after processing may also deviate. The left ends of the output patch images 31 to 34 in the x-coordinate, based on the intermediate patch images 51 to 54, are 0, -1/4, -1/2, and 0, respectively. That is, the sampling-position deviation varies according to the dividing position of the patch image and, in this example, repeats with a cycle of three. Here, the "patch image" refers to a partial-region image after the division processing and before the combination processing, including the input patch images, intermediate patch images, and output patch images.

The second conversion processing may be performed based on the difference in sampling deviation according to the dividing positions of the patch images. When the second conversion processing performs scaling uniformly on the patch images using a method that sets a reference at the upper-left end, etc., the sampling positions fail to align among patch images due to the sampling deviation, and the phase mismatches of the images occur at the boundary of the patch images, degrading image quality. As a specific example, consider linear interpolation as the second conversion processing. In that case, the pixel value at the left end of the output patch image 32 is acquired by interpolating the pixel values at the left end and the right-adjacent pixel of the intermediate patch image 52 with a weight ratio of 2:1, while the pixel value at the left end of the output patch image 33 is acquired by interpolating the corresponding pixels of the intermediate patch image 53 with a weight ratio of 1:2. That is, the weight for weighted addition used for the interpolation differs. Generally, interpolation may be considered using the center of gravity of the regions occupied by pixels. The centroid positions of the pixels in the intermediate patch images 52 and 53 form arithmetic sequences starting from x = 17/4 and x = 33/4 with an interval of 1/2, respectively. The centroid positions of the output patch images 32 and 33 form arithmetic sequences starting from x = 33/8 and x = 63/8 with an interval of 3/4, respectively. The deviations in the starting points are -1/8 and -3/8, indicating that the relative sampling-position relationships before and after the second conversion processing differ among patch images. In other words, sampling deviation occurs. The weight for weighted addition in the interpolation may be changed based on the sampling positions where sampling deviation occurs. In the actual second conversion processing, bilinear interpolation is performed based on the y-coordinate as well, but the weight used in the weighted addition in the bilinear interpolation changes by taking the y-coordinate into consideration as well. The second conversion processing may be performed using known interpolation processing. For example, even if the second conversion processing is bicubic interpolation, weights for weighted addition that take sampling deviation into account may be similarly obtained and applied to each patch image. Calculations using weights such as weighted averages may be performed.

The combination processing may be based on the difference in sampling deviation according to the divided positions of the patch images. The input patch images 21 and 22, 22 and 23, and 23 and 24, respectively, overlap each other in the overlapping regions 61, 62, and 63, and include the same object within the overlapping regions. In the output image 40, if pixels that at least partially overlap with the overlapping region 61 are considered to be associated pixels, the number of pixels associated with the overlapping region 61 is three. Although the pixel values of the pixels associated with the overlapping region 61 can be obtained based on either the input patch image 21 or 22, the overlapping region 61 is disposed closer to the input patch image 21 than to the input patch image 22 due to the sampling deviation.

Accordingly, the combination processing may be performed so that the contribution of input patch image 21 becomes larger based on the sampling deviation. More specifically, the contribution may be determined based on the distance between the center-of-gravity position of each pixel whose value is to be acquired and the center-of-gravity position of each input patch image. For example, the center-of-gravity positions of pixels in the overlapping region 61 are 33/8, 39/8, and 45/8, whereas the center-of-gravity positions of input patch images 21 and 22 are 3 and 7, respectively. Thus, values of the left and central pixels may be weighted at a ratio of 2:1 between input patch images 21 and 22. That is, the pixel value of the output image 40 may be a value obtained by weighted addition of the pixels at the same position in the output patch images 31 and 32 at a ratio of 2:1. Similarly, the pixel to the right of the overlapping region 61 may have a weighting of 1:2 for the contributions from the input patch images 21 and 22. In this case, the contributions (e.g., weights) of the input patch image 21 to each pixel are 2/3, 2/3, and 1/3, which means that it contributes 5/3 to the overlapping region 61. On the other hand, the contributions (e.g., weights) of the input patch image 22 to each pixel are 1/3, 1/3, and 2/3, which means that it contributes 4/3 to the overlapping region 61, and the total weight is smaller than that of the input patch image 21. Similarly, for the overlapping region 63, the overlapping region 63 is located closer to the input patch image 24 than to input patch image 23, opposite to the overlapping region 61. The overlapping region 63 for the input patch images 23 and 24 has a width of three pixels in the output image 40, but the left pixel is acquired by increasing the weight for the input patch image 23, and the center and right pixels are acquired by increasing the weight for the input patch image 24. That is, based on the phase shift at each dividing position due to sampling deviation, the left or right patch image contributes more to each overlapping region. The number of pixels associated with the overlapping region 62 for the input patch images 22 and 23 is four in the output image 40, and the number of pixels in the overlapping region also differs due to sampling deviation. Therefore, if sampling deviation occurs, the combination processing of the overlapping regions may be performed based on the sampling deviation. In a case where the combination processing is not based on the sampling deviation, the combination processing is not based on the change in the number of pixels in the overlapping region, the angle of view for each divided region may shift. Therefore, the image phase may shift at a boundary between patch images, and the image quality may be degraded.

The values of the weights in the combination processing are not limited to those described above, and the weight for one input patch image may be set to zero. That is, the pixel value of the output image 40 may be obtained based solely on one patch image. In the example of the overlapping region 61, the output image 40 may be obtained using the corresponding pixel values of the output patch image 31 for the left and center pixel values, and the corresponding pixel values of the output patch image 32 for the right pixel value. In other words, which patch image to use may be determined based on the sampling deviation. Pixels with a weight of 0 may not be obtained as the output patch image in the second conversion processing.

Although the weights in the combination processing are determined based on the center-of-gravity positions of each pixel and each input patch image, this method is not limited. For example, in some cases, pixel values can be obtained by extrapolation when the output patch image is obtained in the second conversion processing. In a case where a pixel of interest requires extrapolation from a particular patch image, the weight for that input patch image may be reduced. If the kernel of bilinear or bicubic interpolation used to obtain pixel values does not fit within the range of the image input to the second conversion processing, the weight of the corresponding input patch image may be reduced.

The above description explains the problems to be solved by this disclosure but does not limit the scope of the present disclosure.

The input patch images may be a square, but may have different vertical and horizontal sizes.

The high-resolution processing is performed in the order of division processing, first conversion processing, second conversion processing, and combination processing; however, the present disclosure is not limited to this order. The sampling-deviation problem arises when the second conversion processing with a non-integer magnification is performed between the division processing and the combination processing, and sampling deviation occurs regardless of whether the first conversion processing is performed before the division processing or before the combination processing, or the high-resolution processing is performed in the order of division processing, second conversion processing, first conversion processing, and combination processing.

### FIRST EMBODIMENT

This embodiment performs image estimation processing using a machine learning model to input an image and output a high-resolution image. An input image (e.g., a first image) is divided into block-shaped regions to generate a plurality of divided images (e.g., input patch images, second images). Each divided image is input to the machine learning model to perform image estimation processing (e.g., first conversion processing). A plurality of divided images to which at least the first conversion processing has been applied (e.g., output patch images, third images) are combined through combination processing to generate a final output image (e.g., a fourth image) in which the input image has been converted into a high resolution. During the high-resolution processing, high-resolution processing (e.g., second conversion processing) with a variable and non-integer magnification factor is performed, enabling high-resolution processing at an arbitrary target magnification.

This embodiment uses a ResNet model as the machine learning model, although the present disclosure is not limited to this embodiment. The machine learning model may be any model capable of performing high-resolution image processing, such as a support vector machine, decision tree, deep belief network, diffusion model, CNN, RNN, or a neural network such as a transformer. The input specifications of the model are determined by the model architecture, training data, software implementation, or hardware implementation of the image-processing circuit. Such specifications include, for example, the divided positions and shapes of the input images, the number of overlapping pixels between divided images, the number of pixels of the divided images, and a range of pixel values.

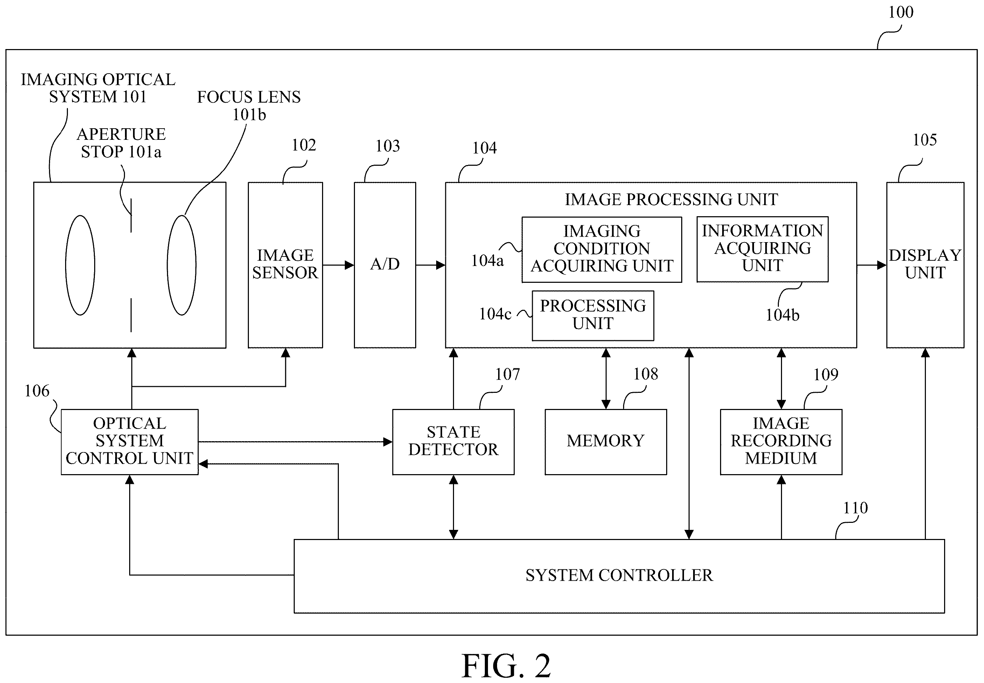

Referring now to Fig. 2, an image pickup apparatus according to this embodiment will be described. Fig. 2 is a block diagram illustrating the configuration of an image pickup apparatus 100. An image processing program for executing high-resolution processing according to this embodiment is installed in the image pickup apparatus 100. The high-resolution processing according to this embodiment is executed by an image processing unit (image processing apparatus) 104 provided inside the image pickup apparatus 100.

The image pickup apparatus 100 may include an optical system 101 (e.g., an imaging optical system) and an image pickup apparatus body (e.g., a camera body). The optical system 101 includes an aperture stop 101a and a focus lens 101b, and is integrated with the camera body. However, the present disclosure is not limited to this example, and the optical system 101 may alternatively be attachable to and detachable from the camera body. In addition to optical elements having refractive surfaces such as lenses, the optical system 101 may include optical elements having a diffraction surface or a reflective surface.

An image sensor 102 may include a CCD sensor or a CMOS sensor, and converts an object image (e.g., an optical image formed by the optical system 101) into an electrical signal via photoelectric conversion, thereby generating (e.g., outputting) an image (e.g., image data). That is, the object image is converted into an analog (e.g., electrical) signal by the photoelectric conversion of the image sensor 102. An A/D converter 103 converts the analog signal input from the image sensor 102 into a digital signal and outputs it to the image processing unit 104.

The image processing unit 104 may perform predetermined processing on the digital signal and further execute the high-resolution processing according to this embodiment. The image processing unit 104 includes an imaging-condition acquiring unit 104a, an information acquiring unit 104b, and a processing unit 104c. The imaging-condition acquiring unit 104a acquires an imaging condition of the image pickup apparatus 100 from a state detector 107. The imaging condition includes, for example, an aperture value (e.g., a F-number), an imaging distance (e.g., a focus position), and a focal length of a zoom lens. The state detector 107 may acquire the imaging condition directly from a system controller 110 or from an optical system control unit 106.

Parameters of a machine learning model used for the high-resolution processing may be stored in a memory (e.g., a storage unit) 108. The memory 108 may be implemented by a ROM or the like. An output image processed by the image processing unit 104 is stored in an image recording medium 109 in a predetermined format. A display unit 105, implemented by an LCD or organic EL display, displays an image that has received predetermined display processing based on an image to which sharpening processing has been applied. However, the image displayed on the display unit 105 is not limited to this configuration, and an image that has received simplified processing for high-speed display may alternatively be displayed.

A system controller 110 may control operations of the image pickup apparatus 100. Mechanical driving of the optical system 101 is performed by the optical system control unit 106 in accordance with instructions from the system controller 110. The optical system control unit 106 controls the aperture diameter of the aperture stop 101a such that a predetermined F-number is achieved. The optical system control unit 106 also controls the position of the focus lens 101b through an autofocus (AF) mechanism or a manual-focus mechanism (not illustrated), in order to perform focusing based on the object distance. However, functions such as aperture control of the aperture stop 101a and manual focusing may be omitted according to specifications of the image pickup apparatus 100.

Although optical elements such as a low-pass filter or an infrared-cut filter may be disposed between the optical system 101 and the image sensor 102, when a machine learning model optimized for a given image pickup apparatus is used, these effects may need to be considered at the stage of creating training data.

The image processing unit 104 may be implemented by an ASIC. The optical system control unit 106, the state detector 107, and the system controller 110 are each implemented by a CPU or a microprocessor unit (MPU). At least one of the image processing unit 104, the optical system control unit 106, the state detector 107, and the system controller 110 may be implemented by the same CPU or MPU.

The image processing apparatus according to each embodiment includes one or more memories (e.g., memory 108) storing instructions, and one or more processors (e.g., image processing unit 104) that, upon execution of the instructions, operate to serve as the imaging condition acquiring unit 104a, the information acquiring unit 104b, and the processing unit 104c. The one or more processors may include system controller 110.

The image pickup apparatus 100 may also be configured to capture and process moving images in the same manner as still images.

High-resolution processing executed by the image processing unit 104 will now be described specifically according to each embodiment.

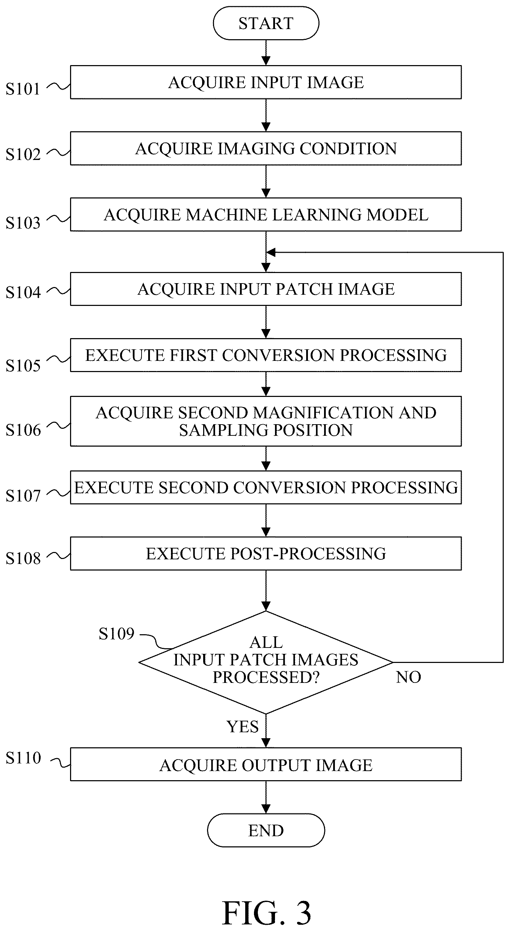

Fig. 3 is a flowchart illustrating high-resolution processing according to this embodiment. The high-resolution processing according to this embodiment is executed based on instructions from the image processing unit 104. In the flowchart, "S" denotes a step. The flowchart according to this embodiment may be embodied as a program for causing a computer to execute functions of the respective steps. This is similarly applied to subsequent flowcharts.

In S101, the image processing unit 104 acquires, as an input image 10, at least one frame from 6K moving-image data captured by the image pickup apparatus 100. The input image 10 is stored in the memory 108. Alternatively, an image stored in the image recording medium 109 may also be acquired as the input image.

In S102, the imaging-condition acquiring unit 104a acquires an imaging condition during imaging of the input image 10. The imaging condition includes the focal length, the aperture value, and the imaging distance determined relative to an in-focus object of the optical system 101. In a case where the optical system 101 is attachable to and detachable from the camera body such that different lenses can be attached to the image pickup apparatus 100, the imaging condition further includes a lens ID or a camera ID. The imaging condition may be acquired directly from the image pickup apparatus 100 or acquired from information attached to the input image (e.g., EXIF information).

In S103, the information acquiring unit 104b acquires, from the memory 108, a machine learning model configured to perform the high-resolution processing based on the characteristics of the image pickup apparatus 100. The machine learning model in this embodiment includes processing based on a neural network. Since the characteristics of the image pickup apparatus 100 vary according to the imaging condition, the imaging condition may be input to the machine learning model, or different machine learning models may be used according to the imaging conditions. In this embodiment, information on the ISO sensitivity during imaging is input to the machine learning model, enabling high-accuracy estimation of a high-resolution image even for input images having different noise levels. Another imaging condition, such as a recording mode of a moving image, may also be used to select a machine learning model. Since signal processing in the image sensor 102 and development processing in the image pickup apparatus 100 may differ according to the recording mode, highly accurate high-resolution processing based on the recording mode can be achieved.

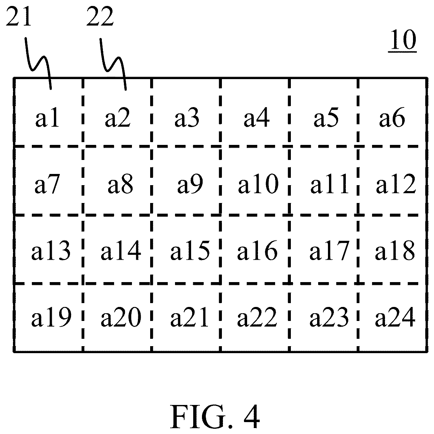

In S104, the image processing unit 104 acquires, from a plurality of divided regions obtained by dividing the input image 10, one divided image (e.g., input patch image, second image) to be input to the machine learning model. Fig. 4 illustrates division processing and illustrates, by broken lines, dividing positions for dividing the input image into block-shaped regions. Each partial region enclosed by a broken line corresponds to a divided region to be acquired as an input patch image, and although not illustrated, the divided regions overlap one another. The dividing positions and divided sizes are implemented in advance in the image processing unit 104 as an ASIC. Since the machine learning model performs processing on an image in block units, one of a1 to a24 is acquired in S104. High-resolution processing may be executed only for designated regions in the input image 10, in which case only divided regions used as input patch images may be acquired. The divided region size is 300×200 pixels and the number of overlapping pixels is 32, but the present disclosure is not limited to this example, and they may be an arbitrary size and an arbitrary number of overlapping pixels.

In S105, the processing unit 104c inputs the input patch image acquired in S104 to the machine learning model acquired in S103 and acquires an intermediate patch image to which high-resolution processing is applied at a magnification (e.g., a first magnification) determined during training (e.g., a first conversion processing). Here, the first magnification is 2×, and the intermediate patch image is acquired at a resolution corresponding to a 12K moving-image frame.

In S106, the information acquiring unit 104b acquires a magnification (e.g., a second magnification) for high-resolution processing in the second conversion processing of S107 based on a target magnification designated by the user and the first magnification. The information acquiring unit 104b acquires sampling positions in an image output in the second conversion processing based on the dividing position, the divided size, and the second magnification. Since the sampling position is obtained as the coordinates of the center-of-gravity positions of pixels in the output image relative to the center-of-gravity positions (sampling positions) of pixels in the intermediate patch image, the sampling position includes information on sampling deviation.

In S107, the image processing unit 104 executes the second conversion processing based on the second magnification and the sampling position acquired in S106. By performing the reduction processing using the bicubic interpolation based on the sampling position, the intermediate patch image acquired in S105 is low resolution at sampling positions having different phases for each dividing position. That is, when the upper-left corner of the intermediate patch image is set as an origin, the sampling positions of the output image differ according to the dividing positions, and low-resolution processing based on sampling deviation is executed. The second magnification is 2/3×, and sampling corresponding to a frame of 8K moving-image data is performed.

In S108, the image processing unit 104 executes post-processing on the image acquired in S107 to acquire an output patch image. In order to adjust the sharpness of the high-resolution processing by the machine learning model, a weighted addition may be performed with an image to which different high-resolution processing has been applied. This embodiment performs a weighted addition with an image obtained by bicubic interpolation of the input patch image at a magnification equal to the product of the first magnification and the second magnification (e.g., a target magnification), but the present disclosure is not limited to this example. For example, outputs obtained by executing the first conversion processing using different machine learning models, or different outputs when the first conversion processing outputs multiple results, may be used. In a case where the output resolutions of the machine learning models differ, a weighted addition may be performed after resolutions are matched by the second conversion processing. The uniform value for the weighted addition may be acquired from the memory 108 for the entire image or the addition using a different weight may be used for each region of the image. For example, for high-contrast objects likely to exhibit overshoot, the weight of the bicubically interpolated image may be increased, and the weight of the bicubically interpolated image may also be increased for human faces to make skin look beautiful.

In S109, the image processing unit 104 determines whether all input patch images have been processed. In a case where all images have been processed, S110 is executed; otherwise, the flow returns to S104.

In S110, the image processing unit 104 arranges a plurality of output patch images according to the pre-division positional relationship and acquires a combined output image. Since the divided regions and input patch images overlap each other, there is flexibility in a method for obtaining the output image during the combination processing. In a case where the divided regions overlap each other, the output image may either be trimmed so that regions do not overlap each other or combined through weighted averaging of the overlapping regions. In a case where there is no sampling deviation, the overlapping regions can be divided at the center and combined based on a closer divided region, i.e., the input patch image. The weights of one overlapping input patch image and the weights of the other overlapping input patch image can be set to be line-symmetrical about the center of the overlapping region, and then combined. However, if there is a sampling deviation, as illustrated in FIG. 1, the overlapping region may be located closer to one input patch image than to the other, or the number of pixels associated with the outer overlapping region may differ for each overlapping region. Accordingly, as described above, combination processing is performed based on the sampling deviation. This completes the entire image processing in this embodiment.

The order of processing in this embodiment may be modified as appropriate. The acquisition of the imaging condition in S102 and the acquisition of the machine learning model in S103 may only be executed before the machine learning model is used in S105. When different machine learning models are used for different input patch images, a plurality of machine learning models may be acquired in S103 or acquired sequentially as needed. The second magnification and sampling positions in S106 may be acquired before S107.

In the post-processing of S108, the sharpness adjustment may be reflected in the output image and may therefore be applied after the output patch images are combined in S110, or applied just after the first conversion processing in S105. In such cases, an image obtained based on the input image may be resolution-converted using known resolution-conversion processing as needed and then subjected to weighted addition. However, the first conversion processing, the second conversion processing, and the post-processing may be performed in this order. Since post-processing is executed on an image reduced by the second conversion processing, processing load and memory capacity can be reduced. As described above, when the high-contrast portions of an object or human skin are detected, processing load and memory capacity can also be reduced due to the small resolution. Therefore, in a case where the second conversion processing is enlargement processing, unlike this embodiment, the first conversion processing, the post-processing, and the second conversion processing may be performed in this order.

The combination processing considers changes in the relationship between the center of the overlapping region and each divided region due to sampling deviations. As long as it is possible to take into consideration that the relationship between the divided regions is due to sampling deviation, different processing may be used. For example, since changes in sampling deviation occur periodically, the number of pixels to be trimmed may be determined by taking the period into consideration when performing the combination processing. Furthermore, when trimming is performed so that respective divided regions do not overlap each other in the combination processing, the trimming may be performed simultaneously with the acquisition of the output patch image. In other words, in acquiring the output patch image, pixels whose weight is 0 in the combination processing may not be acquired. Thereby, the trimming, which is part of the combination processing, can be considered to have been performed simultaneously with the acquisition of the output patch image.

The trimming processing may be applied to the third image obtained from the second images based on the first conversion processing and the second conversion processing in at least a part of the regions where the second images overlap each other. Dividing the input patch images so that they overlap each other is effective in reducing the impact of the first conversion processing not performing the desired processing at the edges of the image. Therefore, trimming may be performed just after the first conversion processing. However, if the second conversion processing is performed after trimming, pixel values cannot be accurately obtained at the edges of the image when kernel-based interpolation processing is performed in the second conversion processing. Therefore, after the combination processing, the image becomes discontinuous at the boundaries of the division processing, degrading the image quality of the output image. Therefore, trimming processing may be applied after both the first conversion processing and second conversion processing.

Although all output patch images corresponding to the divided regions have been acquired prior to the combination processing, the combination processing may alternatively be executed each time an output patch image is acquired. For example, an initialized output image may be prepared, and each time an output patch image is acquired, pixel values may be written to corresponding regions of the output image. Even when weighted addition is performed across a plurality of divided regions, each output patch image may simply be multiplied by a weight used for the weighted addition and then added to the corresponding region of the output image. Thereby, a weighted-added output image can be obtained at the point in time when all overlapping divided regions have been combined.

In this embodiment, the information acquiring unit 104b obtains the machine learning model and the weights used for the weighted addition in S108 from the memory 108. However, the present disclosure is not limited to this example. For example, when the image pickup apparatus 100 is configured such that the optical system 101 is detachably mounted to the camera body, the information acquiring unit 104b may obtain the parameters from a memory provided in the lens apparatus that includes the optical system 101. In addition to storing data in the memory provided in the image pickup apparatus 100 or the lens apparatus, the parameters may be stored in advance on a server. In such a case, the machine learning model, the weights for the weighted addition, and other parameters can be downloaded to the image pickup apparatus 100 or the lens apparatus through communication when needed.

For one of the input patch images, processing different from the first conversion processing may be executed in parallel with the first conversion processing. The processing different from the first conversion processing includes at least one of the division processing, combination processing, and second conversion processing based on a different input patch image. In the block division processing, processing is performed sequentially for each block; thus, the processing time depends on the number of blocks. In other words, the higher the resolution of the input image is, the longer the processing time is. Thus, the processing for each block may be executed in parallel. In particular, the first conversion processing using the machine learning model tends to require a long processing time and easily becomes the rate-determining step. In particular, the first conversion processing using the machine learning model takes a long time and is likely to be a rate-limiting step, so the overall processing can be sped up by performing other processing in parallel. For example, in parallel with the first conversion processing for a certain divided region, the combination processing or second conversion processing may be performed on the divided region that has previously undergone the first conversion processing. In parallel with the first conversion processing for a certain divided region, a subsequent divided region may be obtained by the division processing, and the second conversion processing may then be performed on that divided region. In particular, the second conversion processing is the second most time-consuming processing after the first conversion processing, and may be performed in parallel with the first conversion processing. In the configuration that performs the second conversion processing before the combination processing, the second conversion processing is performed for each divided region, so it can be performed in parallel with the first conversion processing.

The first conversion processing may be executed using at least one of a GPU and a processor for the machine learning model, and the second conversion processing may be executed using at least one of a CPU and a processor different from the processor for the machine learning model. The processing time for the first conversion processing can be reduced by using a processor suitable for operations of machine learning models, particularly neural networks. In a PC, using a GPU enables a reduction in the processing time. On the other hand, the second conversion processing performs processing based on sampling deviation, and thus the processing for each block is not uniform and is more complex. Thus, the second conversion processing may not be suitable for processing using the processor dedicated to the machine learning model or the GPU. Accordingly, the processing time can be reduced by using a CPU or another processor different from the processor dedicated to the machine learning model. Furthermore, by executing the first conversion processing and the second conversion processing on different devices, the overall high-resolution processing can be executed without the influence of each conversion processing.

The image pickup apparatus 100 may output the input image to an image processing apparatus provided separately from the image pickup apparatus 100, and the image processing apparatus may perform the image processing. In this case, information on the imaging condition and the target region may be transferred from the image pickup apparatus 100 to the image processing apparatus directly or indirectly through communication. Whether the information is appended to the input image or transferred separately may be selected as appropriate.

While the high-resolution processing has been applied to captured images in this embodiment, the target of image estimation processing may be any map that can be represented as an image having two-dimensional pixel values. For example, a depth map, optical flow, or CG may be handled as an image.

The divided regions may be uniformly divided regions. Thereby, the input data supplied to the machine learning model may be of a uniform size.

The image in this embodiment is a two-dimensional image, but since the machine learning model involves convolution or similar operations, the divided region may be rectangular. As a division method, the image may be divided into blocks in the horizontal and vertical two-dimensional directions.

### SECOND EMBODIMENT

The first embodiment illustrates an example in which high-resolution processing is performed based on sampling deviation. This embodiment illustrates an example in which high-resolution processing is performed by devising the division processing.

The configuration of the image pickup apparatus 100 is the same as that in the first embodiment, and thus a description thereof will be omitted.

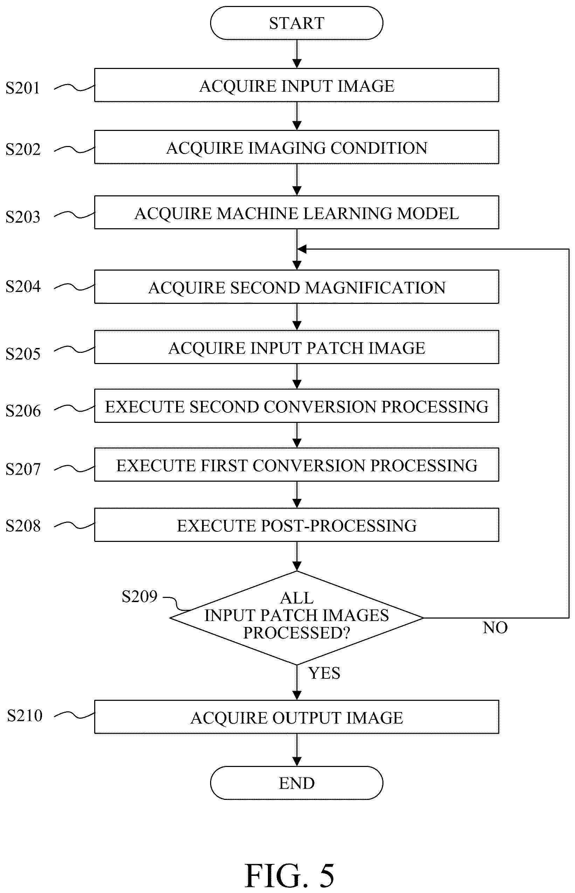

Fig. 5 is a flowchart illustrating the high-resolution processing according to this embodiment. The high-resolution processing according to this embodiment is executed under the control of the image processing unit 104.

The processing in S201 to S203 is similar to the processing in S101 to S103, respectively, and thus a description thereof will be omitted.

In S204, the information acquiring unit 104b acquires the second magnification in the same manner as in S106. On the other hand, since sampling deviation does not occur in this embodiment as will be described later, it is not necessary to acquire the sampling position for each divided region.

In S205, the image processing unit 104 acquires the input patch images such that no sampling deviation occurs, unlike in S104. Assume that the sampling pitch in the image output by the second conversion processing is r times that of the input patch image. Also assume that i is the number of pixels in the horizontal direction of the input patch image, and o is the number of overlapping pixels on one side in the horizontal direction of the input patch image. In a case where overlapping pixels are combined by trimming, the number of pixels that one input patch image occupies in the output image is (i-o)*r. Therefore, when (i-o)*r is an integer, no sampling deviation occurs between adjacent divided regions. Since the overlapping region is located only on one side of the outermost divided region, the number of pixels that the outermost input patch image occupies in the output image is (i-o/2)*r. Therefore, when (i-o/2)*r is an integer, no sampling deviation occurs between the first and second outermost divided regions.

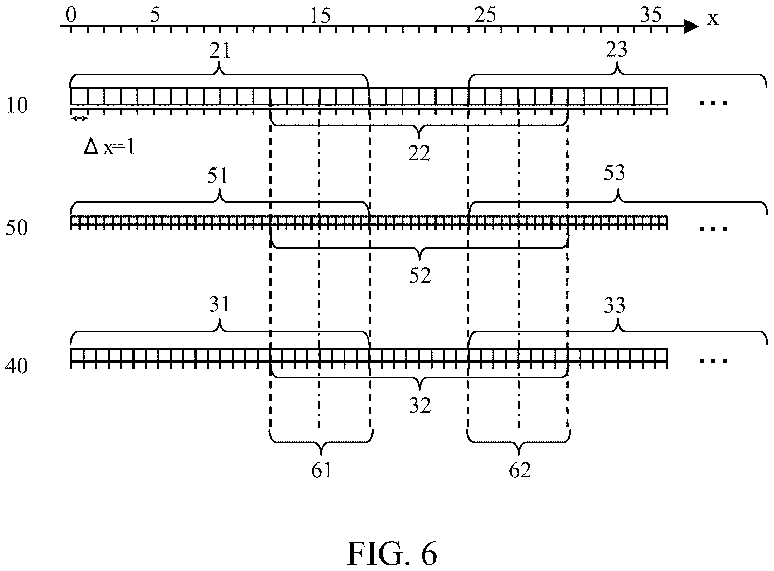

Fig. 6 illustrates an example of the division processing in this embodiment, and a sampling example when no sampling deviation occurs. In this example, i = 18, o = 6, and r = 4/3. That is, the input patch image size is 18×18, the number of overlapping pixels of the input patch images 21 to 23 is 6 pixels, and since the second conversion processing of magnification 2/3× is performed after the first conversion processing of magnification 2×, r is the target magnification and is 4/3. In this case, no sampling deviation occurs in the output patch images 31 to 33. When the processing order is the division processing, the second conversion processing, the first conversion processing, and the combination processing, r corresponds to the second magnification.

In this embodiment, unlike Fig. 6, the input patch image size is 450 × 300, and the number of overlapping pixels in the horizontal and vertical directions is 36 and 24, respectively. In this case as well, sampling deviation does not occur.

In S206, the image processing unit 104 performs the second conversion processing. However, in this embodiment, the second conversion processing differs from that in the first embodiment in that the sampling position is not acquired for each input patch image.

The processing in S207 to S209 is similar to the processing in S105, S108, and S109, respectively, and thus a description thereof will be omitted.

In S210, the image processing unit 104 performs the combination processing. However, the combination processing in this embodiment differs from that in the first embodiment in that it is not based on sampling deviation. The combination processing is performed by trimming half the number of pixels of the overlapping region for all patch images. Thereby, the entire image processing in this embodiment is completed.

The size of the second image may be determined based on the second magnification or the target magnification. This prevents the occurrence of sampling deviation and allows an output image with reduced image quality degradation to be obtained. When r is the target magnification, the size may be determined based on the target magnification, and when r is the second magnification, the size may be determined based on the second magnification. Particularly, when the input patch images do not overlap each other, sampling deviation can be eliminated by determining the size of the second image.

The number of overlapping pixels in the second image may be determined based on the second magnification or the target magnification. This prevents the occurrence of sampling deviation and allows an output image with reduced image quality degradation to be obtained. When r is the target magnification, the number of overlapping pixels may be determined based on the target magnification, and when r is the second magnification, the number of overlapping pixels may be determined based on the second magnification.

Each embodiment can provide an image processing method that can perform high-resolution processing with a variable magnification using a machine learning model while reducing memory usage.

### OTHER EMBODIMENTS

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like. One or more of the functional blocks illustrated in Fig. 2 may be implemented by hardware such as an ASIC or a programmable logic array (PLA), or by a programmable processor such as a CPU or MPU executing software. They may also be implemented by a combination of software and hardware. Therefore, even when different functional blocks are described as the main operation entities in the following description, they may be implemented by the same hardware.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

## Claims

1. An image processing method comprising:
acquiring a plurality of second images (21 to 24) by dividing a first image (10);
acquiring a plurality of third images (31 to 34) by increasing a resolution of each of the plurality of second images at a first magnification using a machine learning model; and
acquiring a fourth image (40) by combining the plurality of third images with each other,
wherein the fourth image corresponds to an image acquired by increasing a resolution of the first image at a target magnification, and
wherein the image processing method further comprises:
converting a resolution of any one of the first image, at least one of the plurality of second images, at least one of the plurality of third images, or the fourth image, at a second magnification based on the first magnification and the target magnification.

2. The image processing method according to claim 1, wherein the converting is performed after the dividing.

3. The image processing method according to claim 2, wherein in the converting, at least one resolution of the plurality of second images is converted at the second magnification.

4. The image processing method according to claim 2, wherein in the converting, at least one resolution of the plurality of third images is converted at the second magnification.

5. The image processing method according to any one of claims 1 to 4, wherein at least one of the converting and the combining is performed based on information on a sampling deviation obtained based on the second magnification.

6. The image processing method according to claim 5, wherein in the converting, a pixel value of a predetermined pixel of another image is acquired based on a weighted addition of a plurality of pixels in a predetermined image, and
wherein a first weight used in the weighted addition is obtained based on the information on the sampling deviation.

7. The image processing method according to claim 5, wherein the fourth image includes an overlapping region that partially overlaps the plurality of second images,
wherein a second weight for the plurality of third images is obtained based on the information on the sampling deviation, and
wherein a pixel value of the fourth image in the overlapping region is obtained based on the second weight.

8. The image processing method according to claim 7, wherein a sum of the second weights corresponding to one of the plurality of second images for each pixel in the overlapping region is greater than a sum of the second weights corresponding to another of the plurality of second images for each pixel in the overlapping region.

9. The image processing method according to claim 7, wherein in acquiring a pixel value of a predetermined pixel of the fourth image in the overlapping region, a weight for at least one of the plurality of third images is zero or the at least one of the plurality of third images is not used.

10. The image processing method according to any one of claims 1 to 9, wherein the plurality of second images are acquired such that one of the plurality of second images overlaps another of the plurality of second images.

11. The image processing method according to any one of claims 1 to 10, wherein trimming processing is applied to the third images obtained from the second images by the increasing of the resolution at the first magnification and the converting in at least a part of a region where the plurality of second images overlap each other.

12. The image processing method according to any one of claims 1 to 11, wherein at least one frame is obtained as the first image from a moving image.

13. The image processing method according to any one of claims 1 to 12, wherein processing different from the increasing of the resolution at the first magnification is executed in parallel with the increasing for one of the plurality of second images.

14. The image processing method according to claim 13, wherein the processing different from the increasing of the resolution at the first magnification includes at least one of the dividing to obtain another of the plurality of second images, the combining based on another of the plurality of second images, and the converting based on another of the plurality of second images.

15. The image processing method according to any one of claims 1 to 14, wherein the increasing of the resolution at the first magnification is executed using at least one of a GPU and a processor for a machine learning model, and
wherein the converting is executed using at least one of a CPU and a processor different from the processor for the machine learning model.

16. The image processing method according to any one of claims 1 to 15, wherein the converting is reduction processing.

17. The image processing method according to any one of claims 1 to 16, wherein a size of the second image is determined based on one of the second magnification and the target magnification.

18. The image processing method according to claim 10, wherein a number of overlapping pixels of each of the plurality of second images is determined based on one of the second magnification and the target magnification.

19. An image processing apparatus (104) comprising:
a unit configured to acquire a plurality of second images (21 to 24) by dividing a first image (10);
a unit configured to acquire a plurality of third images (31 to 34) by increasing a resolution of each of the plurality of second images at a first magnification using a machine learning model; and
a unit configured to acquire a fourth image (40) by combining the plurality of third images with each other,
wherein the fourth image corresponds to an image acquired by increasing a resolution of the first image at a target magnification, and
wherein the image processing apparatus further comprises:
a unit configured to convert a resolution of any one of the first image, at least one of the plurality of second images, at least one of the plurality of third images, or the fourth image, at a second magnification based on the first magnification and the target magnification.

20. A program that causes a computer to execute the image processing method according to any one of claims 1 to 18.
